# EUROPÄISCHE PATENTSCHRIFT

(11) **EP 2 429 348 B1**
(45) Veröffentlichungstag und Bekanntmachung des Hinweises auf die Patenterteilung: **24.10.2012**
(21) Anmeldenummer: 11728592.4
(22) Anmeldetag: 26.05.2011
(51) Int. Cl.: A47B 81/00, A47F 7/04, A47B 47/02

(54) **STECKREGAL ZUR LAGERUNG VON SÄTZEN VON FAHRZEUGRÄDERN**
PLUG-IN RACK FOR BEARING SETS OF VEHICLE WHEELS
RAYONNAGE DE STOCKAGE POUR L'ENTREPOSAGE D'ENSEMBLES DE ROUES DE VÉHICULES

(30) Priorität: 23.06.2010 DE 202010005700 U
(43) Veröffentlichungstag der Anmeldung: 21.03.2012
(73) Patentinhaber: Irega AG, 4528 Zuchwil (CH)
(72) Erfinder: SCHOLZ, Gottfried, 68480 Biederthal (FR)
(74) Vertreter: Aue, Hans-Peter
(86) Internationale Anmeldenummer: PCT/EP2011/058620
(87) Internationale Veröffentlichungsnummer: WO 2011/160914

(56) Entgegenhaltungen:
- DE-B- 1 178 564
- DE-U1-202009 000 061
- FR-A1- 2 516 770
- NL-A- 8 000 376

## Beschreibung

Die Erfindung bezieht sich auf ein Steckregal insbesondere zur Lagerung von Sätzen von Fahrzeugrädern und -reifen, die aufrecht und sich jeweils an den Laufflächen gegenüber stehend hintereinander in Fächern des Steckregals gelagert sind, mit mehreren an ihren Längsseiten zueinander beabstandeten Teilregalen mit jeweils einer Mehrzahl von vertikalen, im Querschnitt T-förmigen, aus jeweils einem gewalzten Hohlprofil bestehenden Längspfosten, die durch mehrere Traversen an den Regalstirnseiten und Reifenträgern an den Regallängsseiten verbunden sind und somit die Fächer bilden.

Es ist eine Vielzahl von Regalen bzw. Regalsystemen bekannt, deren Einzelteile, wie Längspfosten, Seitenleitern bzw. Traversen und Fachböden durch unterschiedliche Befestigungsarten, z.B. durch Schweißen oder Verschrauben, miteinander verbunden sind. Solche Regale weisen in der Regel mehrere Längspfosten an den Regaleckpunkten auf, an denen in bestimmten vertikalen Abständen ein oder mehrere waagerechte Fachböden befestigt sind, auf denen Gegenstände gelagert werden.

Nachteilig bei solchen Regalen bzw. Regalsystemen ist, dass diese in Abhängigkeit von der Verbindungsart nicht mehr zerlegt oder den Bedürfnissen des Benutzers angepasst werden können. Dadurch weisen diese Regale bzw. Regalsysteme zwar eine hohe Stabilität auf, jedoch ist eine Variation der Größe und Anzahl der Fachböden im Regal bzw. Regalsystem stark begrenzt. Weiterhin sind diese Regale bzw. Regalsysteme auch auf Grund ihres durch die feste Verbindung benötigten Platzvolumens nur schwer transportierbar.

Darüber hinaus ist eine Vielzahl von Stecksystemen für Regale bekannt, bei denen die Regalteile, wie Fachböden, Längspfosten, Traversen usw. zum Beispiel durch Nut-FederVerbindungen verbunden werden. Bei manchen Systemen werden die Auflageboards einfach auf Stege oder Stifte an den Traversen aufgelegt. Dies führt aber zu einer hohen Instabilität des Regalsystems. Verschraubte oder durch spezielle Verbindungselemente verbundene Regale bzw. Regalsysteme sind nur mit großem Aufwand montierbar oder demontierbar, so dass die damit befassten Personen Auf- bzw. Abbauprobleme haben.

Aus der WO 03/028506 A1 ist ein Regalsystem zur Lagerung und Archivierung von Gegenständen bekannt, im Wesentlichen bestehend aus mindestens einem Regal mit rechteckigem Querschnitt, an dessen Eckpunkten vertikale Längspfosten angeordnet sind, wobei zwischen jeweils zwei stirnseitigen Längspfosten horizontale Traversen zur Befestigung von mit je einer abwärts gerichteten Stirnseitenlasche versehene Fachböden anbringbar sind und die Längspfosten Aussparungen zur Aufnahme von vertikal und horizontal beabstandeten und abwärts gerichteten Paaren von Haken an den Traversen aufweisen. Die abwärts gerichtete Stirnseitenlasche des Fachbodens ist festgepresst zwischen der Traverse und den diese tragenden Längspfosten des Regals verklemmbar.

Weiterhin offenbart die FR 2 516 770 A1 ein Steckregal mit mehreren an ihren Längsseiten zueinander beabstandeten Teilregalen mit jeweils einer Mehrzahl von vertikalen aus jeweils einem gewalzten Hohlprofil bestehenden Längspfosten, die durch mehrere Traversen an den Regalstirnseiten und Fachböden an den Regallängsseiten verbunden sind und somit Ablagefächer bilden.

Sehr viele Halter von Kraftfahrzeugen lassen ihre Sommer - und/oder Winterräder bzw. -reifen extern einlagern, beispielsweise bei Reifen- oder Autohändlern. Dort werden die Räder bzw. Reifen in Regalen gelagert. In den letzten Jahren sind auf Grund der Entwicklung der Autoindustrie, d.h. der Trend zu größeren und leistungsfähigeren und damit zu schwereren Kraftfahrzeugen, die Räder immer breiter und größer geworden. Daher stellen sich neue Anforderungen an die Lagerregale, insbesondere hinsichtlich Größe, Abmessungen und Stabilität. Zukünftig ist abzusehen, dass Kraftfahrzeugtreibstoff immer knapper und teurer wird. Fahrzeuge werden mit alternativen Antriebssystemen, z.B. mit Elektromotor und schweren Batterien ausgerüstet, so dass die Fahrzeuge schwerer und damit die Räder und Reifen ebenfalls schwerer und größer werden können. Andererseits können die Kraftfahrzeuge aber auch leichter werden, um Antriebsenergie zu sparen, so dass die Räder und Reifen kleiner und schmaler werden.

Räder und Reifen werden jedoch fachbezogen gelagert, wobei die Fachgrößen und -abmessungen in der Regel immer gleich sind. Dies hat erhebliche Nachteile hinsichtlich der Ausnutzung des vorhandenen Platzes und der Regalgröße und - gestaltung.

Die Lagerung der Räder und Reifen in den fachbezogenen Regalen erfolgt meistens normalerweise 4 Stück nebeneinander. Bekannt ist auch die Lagerung von 4 Stück paarweise, also 2 neben- und 2 hintereinander in sogenannten Blockregalen und 4 Stück hintereinander in sogenannten Magazinregalen. Jedes Fach hat dabei also seine entsprechende Breite. D.h. wenn kleine Räder und Reifen zu lagern sind, werden die Fachgrößen nicht ausgenutzt und Lagerplatz geht verloren. Oder wenn große Räder und Reifen zu lagern sind, reicht der Platzbedarf in den vorhandenen Regalfächern beispielsweise für einen Rädersatz nicht aus. Darüber ist das Umfallen der Fahrzeugräder und -reifen beispielsweise bei zu großen Fächern zwangsläufig, weil diese in der Regel dazu neigen, nach einer Seite abzukippen bzw. seitlich wegzurollen, da die Felge durch ihre im Querschnitt unsymmetrische Ausbildung an einer Seite schwerer ist als an der anderen Seite.

Daher ist es notwendig, die die Fächer entsprechend der gewünschten Räder- und Reifenbreiten bzw. -größen individuell zu verstellen und die Lagerung der Räder und Reifen entsprechend den Gegebenheiten anpassen.

Es ist Aufgabe der Erfindung, ein Blockregal der eingangs genannten Art zur Lagerung von Sätzen von Fahrzeugrädern zu schaffen, mit dem platzsparend und komfortabel komplette Fahrzeugrädersätze gelagert und gehandhabt werden können, wobei jedes Fach beliebig dimensioniert und das Regal den vorhandenen Räumlichkeiten angepasst werden kann.

Erfindungsgemäß wird die Aufgabe dadurch gelöst, dass an jedem Längspfosten, im Querschnitt gesehen, an den beiden Seitenflächen dessen senkrechten Teils und an den beiden Stirnseitenflächen dessen Querteils jeweils eine Lochreihe sowie an der oberen Außenfläche dessen Querteils zwei zueinander beabstandete Lochreihen rasterartig über die gesamte Länge des Längspfostens ausgebildet sind, wobei die Lochungen jeweils in Form, Abmessungen und Abstand gleich sind, und an der Unterseite des Längspfostens die beiden senkrechten Abschlusskanten des Hohlprofils ineinander gefalzt sind, und dass in die Lochungen des Längspfostens die Traversen gegebenenfalls mit den Reifenträgern mit jeweils einem Paar von zu den Lochungen kongruenten, abwärts gerichteten Haken senkrecht einhängbar sind, wobei der Reifenträger eine Rückwand und, im Querschnitt gesehen, zwei übereinander angeordnete, je einen Hohlraum bildende Auswölbungen mit jeweils einer Lochung aufweist, wobei die Haken der Traverse durch die Lochungen in die Hohlräume der Auswölbungen des Reifenträgers eingreifen, so dass die Traverse am Längspfosten und der Reifenträger an der Traverse immer an zwei Punkten eingehängt sind.

Es wird klargestellt, dass unter den Begriff "Räder" im Sinne der Erfindung auch Reifen und Felgen von Fahrzeugen verstanden werden und umgekehrt, die ebenfalls im erfindungsgemäßen Steckregal gelagert werden können.

So können eine Mehrzahl von Teilregalen gebildet werden, die nebeneinander und/oder hintereinander angeordnet und jeweils durch die Traversen und Reifenträger miteinander verbunden sind. In diesem Steckregal können vollständige Sätze von Fahrzeugrädern gelagert werden. Dabei werden die erforderlichen Bauteile, wie Längspfosten, Traversen , Reifenträger und Fachböden ineinander gesteckt, so dass keinerlei andere mechanische Verbindungen, wie Verschraubungen notwendig sind.

Dabei werden die Fahrzeugräder jeweils eines Satzes aufrecht stehend und sich jeweils an den Laufflächen gegenüber stehend, hintereinander im Steckregal gelagert. So kann ein erster aus vier Fahrzeugrädern bestehender Radsatz, ein zweiter Satz von Fahrzeugrädern neben dem ersten, ein dritter Satz von Fahrzeugrädern neben dem zweiten usw. nebeneinander und aufrecht stehend gelagert werden.

Von besonderem Vorteil ist, dass Räder, Felgen und Reifen auch unterschiedlicher Größe in dem Steckregal gelagert werden können. Dies wird eben dadurch erreicht, dass jeder der T-förmigen Längspfosten, im Querschnitt gesehen, an den beiden Seitenflächen dessen senkrechten Teils und an den beiden Stirnseitenflächen dessen Querteils jeweils eine Lochreihe sowie an der oberen Außenfläche dessen Querteils zwei zueinander beanstandete Lochreihen rasterartig über die gesamte Länge des Längspfostens ausgebildet sind.

Dadurch können die anderen Bauteile, nämlich die Traversen mit den Reifenträgern an einer Vielzahl der genannten Lochreihen angedockt werden, wodurch sich vielfältige Ausgestaltungsmöglichkeiten des Steckregals ergeben. Besonders vorteilhaft sind dabei die vielfältigen Variationen und Anpassungsmöglichkeiten der Fächer des Regals hinsichtlich deren Abmessungen in Höhe, Breite und Tiefe, welche bestimmt werden durch die Länge der Traversen und Reifenträger sowie der Länge und Breite der Fachböden. Die Variabilität und Anpassungsmöglichkeiten der Abmessungen der Fächer und Teilregale werden noch dadurch unterstützt, dass die Lochungen jeweils in Form, Abmessungen und Abstand gleich sind. Dem entsprechend sind die Haken bzw. Hakenpaare der Traversen kongruent zu den rasterartigen Lochreihen der Längspfosten, so dass auch die Haken bzw. Hakenpaare rasterartig angeordnet und ausgebildet sind.

Der aus dem Stand der Technik bekannte Längspfosten besteht ebenfalls aus einem gewalzten Hohlprofil. Dieses Hohlprofil war an den Abschlusskanten frei und bildete somit einen Spalt. Dadurch war relativ wenig torsionssteif. Gemäß der Erfindung sind nun die Profilenden, d.h. die senkrechten Abschlusskanten des Längspfostens gequetscht, vorzugsweise gefalzt, so dass der Längspfosten im Querschnitt allseitig geschlossen ist. Dadurch wird eine Torsion des Längspfostens verhindert, womit die Stabilität des Längspfostens erheblich verbessert wird.

Die erfindungsgemäßen Reifenträger ersetzen die Längsstreben bzw. Führungsstäbe gemäß den bekannten Lagerregalen. Mit den beiden Auswölbungen, die für eine Stabilität des Reifenträgers sorgt, kann dieser die Länge des Faches überbrücken. Der Reifenträger weist eine Rückwand und, im Querschnitt gesehen, zwei übereinander angeordnete, je einen Hohlraum bildende Auswölbungen mit jeweils einer Lochung auf. Dabei entsprechen die Lochungen in Form, Abmessung und Raster denen des Längspfostens und damit auch den Haken bzw. Hakenpaaren der Traversen. Der Reifenträger ist so geformt, dass er mit seiner Rückseite in die Traverse eingehängt werden kann. Die Haken der Traverse greifen durch die Lochungen in die Hohlräume der Auswölbungen des Reifenträgers ein. Somit werden die Traverse am Längspfosten und der Reifenträger an der Traverse immer an zwei Punkten eingehängt. Dies dient der erheblich besseren Arretierung und Stabilisierung des gesamten Steckregals.

Durch die deutlich größere Stabilität des Längspfostens kann die Materialdicke des Profilbleches reduziert werden, wobei etwa 1/3 Material eingespart werden können bei größerer Abmessung der Längspfostens gegenüber dem Längspfosten gemäß dem Stand der Technik. Weiterhin wird die Tragfähigkeit des Längspfostens deutlich vergrößert. Diese höhere Tragfähigkeit wiederum kann für größere Fachbreiten genutzt werden, nämlich um das Doppelte, so dass 50% weniger Längspfosten für ein Steckregal benötigt werden. Insgesamt ergibt sich eine Materialeinsparung von etwa 2/3 bei stabileren Längspfosten.

Das Steckregal ist durch die neue besondere Bauweise trotz Materialeinsparung ein stabiles Weitspannregal. Erstmalig kann dieses multifunktionale Regal bei der Räderlagerung auch später als Blockregal mit paarweiser Räderlagerung oder als Magazinregal mit Vierersatz- Hintereinander-Lagerung mit Abrollböden und Führungsstreben umgebaut werden. Abrollböden und Führungsstreben können auch nachgerüstet werden, wobei die Führungsstreben zur Anlage und zum Leiten der aufrechtstehenden Räder beim Einstellen und Entnehmen in das und aus dem Regal dienen. Somit können erstmals durch diese Lösung die Räume auch später bei veränderten Radgrößen optimal genutzt werden. So sind auch die Fachbreiten, auch nur einzelne, noch später veränderbar ohne das gesamte Regal gänzlich umzubauen. Zumindest die rohrartigen Führungsstreben können mit Kunststoffschlauch ummantelt werden, um überstehende Felgenteile zu schützen. Dies kann auch nachgerüstet werden.

Um die Fahrzeugräder eines Satzes aus dem Steckregal entnehmen zu können, wird erst das vordere der vier Fahrzeugräder aus dem vorderen Teilregal entnommen. Um das zweite Rad des Radsatzes aus dem hinter dem ersten Teilregal befindlichen zweiten Teilregal entnehmen zu können, wird dieses vorzugsweise mit Hilfe eines geeigneten Greifinstrumentes einfach über den Reifenträger des zweiten Teilregals nach vorn in das vordere Teilregal gerollt und kann aus diesem entnommen werden. In gleicher Weise werden das dritte und vierte Fahrzeugrad aus dem Steckregal entnommen. Das Greifinstrument kann ein rechenartiges Werkzeug, ein um die Fahrzeugräder umlegbares Zugband oder dergleichen sein.

Zum Einlagern der Räder eines Radsatzes werden diese in umgekehrter Reihenfolge in dem vorderen, zweiten, dritten und hinteren Teilregal platziert.

Für das Steckregal wurde hierfür ein Teleskopgreifer entwickelt, der ausziehbar ist und vorn einen L - Ansatz hat, der ummantelt ist. Mit dem L wird in den Felgenhohlraum gegriffen und das Rad herausgerollt oder hineingeschoben.

Damit ist ein einfaches und komfortables Einstellen und Entnehmen der Räder eines Radsatzes in das und aus dem Steckregal gewährleistet. Des Weiteren ist für das Lagerpersonal stets die Zusammengehörigkeit eines Radsatzes durch die Anordnung der Fahrzeugräder hintereinander klar erkennbar.

Das Steckregal wird durch eine Mehrzahl von horizontal und vertikal ausgebildeten Fächern gebildet, die durch die horizontalen Reifenträger und Traversen gestaltet werden. Selbstverständlich können viele solcher Fächer in mehreren Etagen übereinander und in Lagen nebeneinander im Steckregal vorgesehen werden, um so die Lagerkapazität für Fahrzeugräder erheblich zu vergrößern. Die Größe der Fächer der Regale wird in Abhängigkeit von den Abmessungen der Fahrzeugräder, wie Reifenbreite und Raddurchmesser, und den räumlichen Bedingungen dimensioniert.

Gemäß einer weiteren Ausbildung des Steckregals weist der Reifenträger an seiner Oberseite eine Auflage auf, auf welche die Traverse aufgelegt ist und auf der das Rad oder der Reifen aufliegt. Dies führt zu einer weiteren Stabilisierung des Reifenträgers gemeinsam mit der Traverse über di gesamte Breite des Faches.

Weiterhin ist vorgesehen, dass Reifenträger aus einem gewalzten Hohlprofil besteht, wobei die nach unten weisenden Abschlusskanten des Hohlprofils ineinander gefalzt sind. Durch diese Umbördelung wird der Querschnitt des Reifenträgeres geschlossen und stabil gestaltet, um dabei Torsion zu verhindern.

Gemäß einer Weiterbildung des Steckregals ist in die Traverse ein Fachboden durch Klemmung eingehängt, wobei die Traverse taschenartig ausgebildet und an jeder der Seiten des Fachbodens eine nach unten ragende Seitenwand angelenkt ist, die in die Tasche der Traverse eingreift.

Der der Erfindung zugrunde liegende Gedanke wird in der nachfolgenden Beschreibung anhand von Ausführungsbeispielen, die in den Zeichnungen dargestellt sind, näher beschrieben. Es zeigen:
- Fig. 1: eine Perspektivansicht eines Teils des Steckregals ohne Fahrzeugräder,
- Fig. 2: eine Seitenansicht des Steckregals gemäß Fig. 1,
- Fig. 3: eine Draufsicht des Steckregals gemäß den Fig. 1 und 2,
- Fig. 4: eine vergrößerte Perspektivansicht eines Teils des Steckregals gemäß Fig. 1,
- Fig. 5: eine Seitenansicht des Steckregals gemäß Fig. 4,
- Fig. 6: eine Draufsicht des Steckregals gemäß Fig. 4,
- Fig. 7: eine Perspektivansicht eines Reifenträgers für ein Steckregal,
- Fig. 8: eine Seitenansicht des Reifenträgers gemäß Fig. 7,
- Fig. 9: eine Seitenansicht gemäß Fig. 7 mit einer Traverse und einem Fachboden und
- Fig. 10: eine Perspektivansicht gemäß Fig. 9.

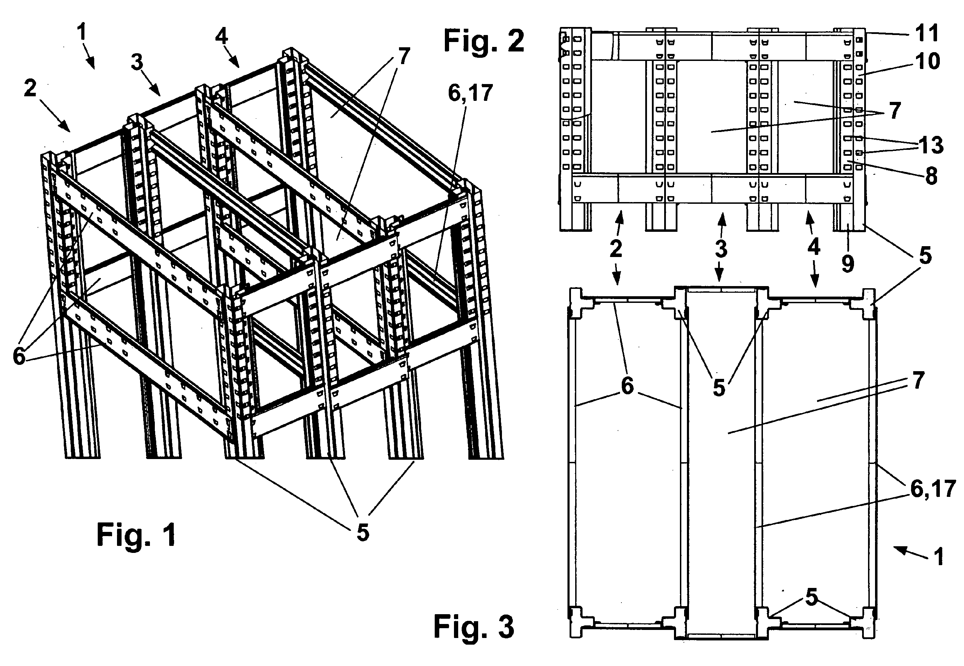

Die Fig. 1 bis 6 zeigen einen Teil eines Steckregals 1, welches aus drei an ihren Längsseiten angeordneten Teilregalen 2, 3 und 4 besteht. Selbstverständlich kann das Steckregal 1 aus mehr oder weniger Teilregalen bestehen, die sowohl an deren Längsseiten als auch an deren Stirnseiten aneinander angeordnet sein können. Das Steckregal 1 weist einen rechteckigen Grundriss auf und besteht vorzugsweise vollständig aus einem metallischen Blechmaterial.

An jedem der Eckpunkte des Steckregals 1 und dessen Teilregalen 2 bis 4 befindet sich jeweils ein vertikaler Längspfosten 5. Dieser wird aus einem Flachbandmaterial gewalztes Hohlprofil gebildet. Die Längspfosten 5 sind durch mehrere zueinander beabstandete waagerechte seitliche, vordere und hintere Traversen 6 miteinander verbunden, so dass die Teilregale 2 bis 4 und somit das Steckregal 1 eine Längs - und Querstabilität besitzen. Die Längenabmessungen der seitlichen, vorderen und hinteren Traversen 6 bestimmen die Regalgröße und somit auch die Größe der Fächer 7. Die Traversen 6 sind an unterschiedlichen Punkten der Längspfosten 5 befestigt, wobei jede Traverse 6 mit jedem ihrer Enden an zwei Punkten am Längspfosten 5 befestigt ist. Ein Längspfosten 5 bildet entweder einen Eckpunkt der äußeren Kontur des Steckregals 1 oder die Verbindung zweier benachbarter Teilregale 2 bis 4. Der Längspfosten 5 weist im Querschnitt eine T-Form auf.

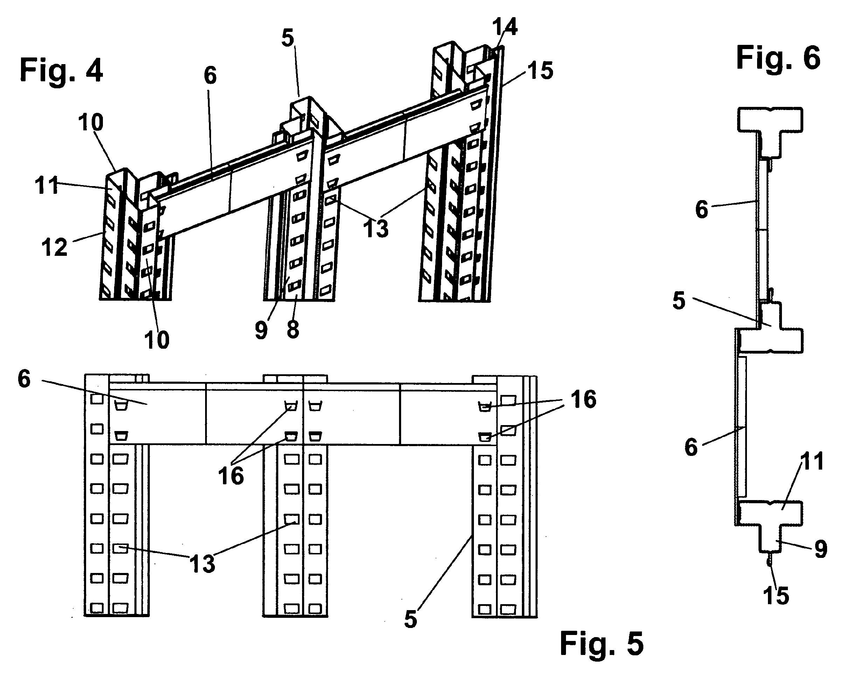

Wie insbesondere aus den Fig. 2 und 4 ersichtlich ist, sind an jedem Längspfosten 5, im Querschnitt gesehen, an den beiden Seitenflächen 8 dessen senkrechten Teils 9 und an den beiden Stirnseitenflächen 10 dessen Querteils 11 jeweils eine Lochreihe sowie an der oberen Außenfläche 12 dessen Querteils 11 zwei zueinander beanstandete Lochreihen rasterartig über die gesamte Länge des Längspfostens 5 ausgebildet. Hierbei sind die Lochungen 13 der Lochreihen jeweils in Form, Abmessungen und Abstand gleich.

An der Unterseite des Längspfostens 5, im Querschnitt gesehen, sind die beiden senkrechten Abschlusskanten 14 des Hohlprofils ineinander gefalzt 15, wie besonders in Fig. 4 gezeigt.

In den Fig. 3 und 6 ist schematisch dargestellt, wie die Traversen 6 an den Längspfosten 5 angeordnet sind. So können die Traversen 6 an den Seitenflächen 8 des im Querschnitt senkrechten Teils 9, an den Stirnseitenflächen 10 des Querteils 11 und an der oberen Außenfläche 13 des Querteils 11 des Längspfostens 5 befestigt sein.

An den Randabschnitten jeder Traverse 6 ist jeweils ein Paar von horizontal und vertikal zueinander beabstandeten und abwärts gerichteten Haken 16 ausgeformt. Die Haken 16 greifen in die Lochungen 13 der Längspfosten 5 des Steckregals 1 bzw. der Teilregale 2 bis 4 ein. Hierbei sind die Haken 16 bzw. Paare von Haken 16 zu den Lochungen 13 der Längspfosten 5 rasterartig und deckungsgleich ausgebildet.

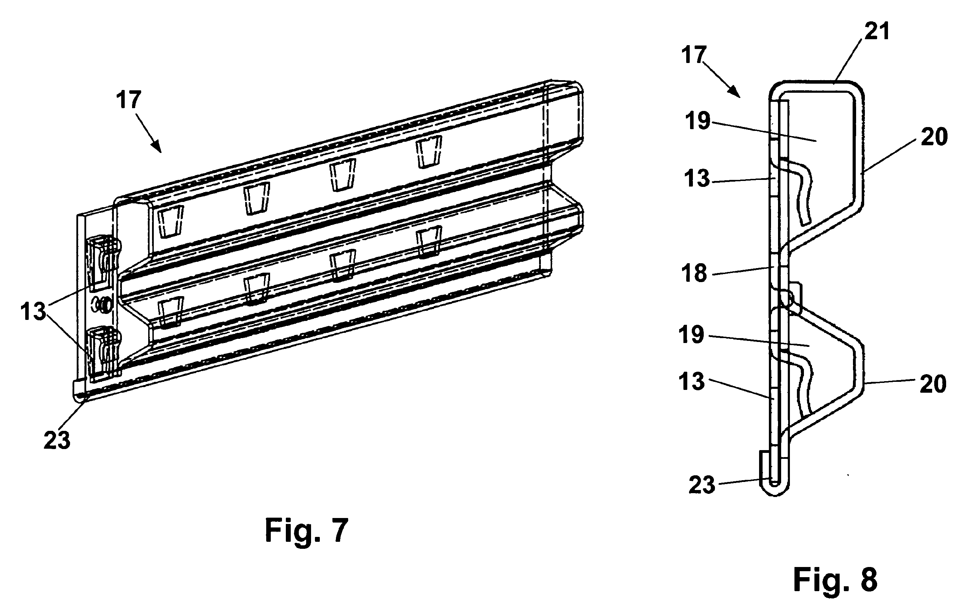

Insbesondere die Fig. 7 und 8 zeigen einen Reifenträger 17, der aus einem gewalzten Metallbandmaterial besteht und einstückig ausgebildet ist. Er besitzt eine Rückwand 18 und, im Querschnitt gesehen, zwei übereinander angeordnete, je einen Hohlraum 19 bildende Auswölbungen 20 mit jeweils einer Lochung 13. Im montierten Zustand des Steckregals 1 greifen die Haken 16 der Traverse 6 durch die Lochungen 13 in die Hohlräume 19 der Auswölbungen 20 des Reifenträgers 17 ein. Dadurch werden die Traverse 6 am Längspfosten 5 und der Reifenträger 17 an der Traverse 6 immer an zwei Punkten eingehängt.

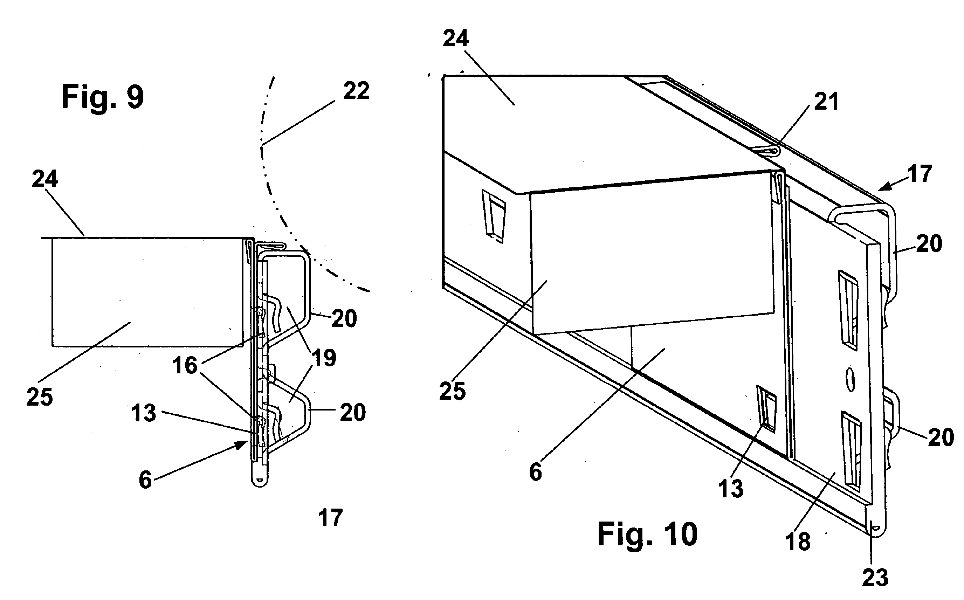

Wie aus den Fig. 9 und 10 zu ersehen ist, weist der Reifenträger 17 an seiner Oberseite, d.h. an der Außenseite der oberen Auswölbung 20 eine Auflage 21 auf, auf welcher die Traverse 6 aufgelegt ist und auf der das zu lagernde Rad 22 oder der Reifen aufliegt, wie durch die Strich-Punkt-Punkt-Strich-Linie in Fig. 9 angedeutet ist.

Die nach unten weisenden Abschlusskanten des Hohlprofils des Reifenträgers 17 sind ineinander gefalzt 23.

In die Traverse 6 ist ein Fachboden 24 durch Klemmung eingehängt. Hierzu ist die Traverse 6 taschenartig ausgebildet. An jeder der Seiten des Fachbodens 24 ist eine nach unten ragende Seitenwand 25 angelenkt, die in die Tasche der Traverse 6 eingreift und durch diese verklemmt wird.

### Liste der Bezugszeichen

- 1: Steckregal
- 2: Teilregal
- 3: Teilregal
- 4: Teilregal
- 5: Längspfosten
- 6: Traverse
- 7: Fach
- 8: Seitenfläche
- 9: Senkrechter Teil
- 10: Stirnseitenfläche
- 11: Querteil
- 12: Obere Außenfläche
- 13: Lochung
- 14: Abschlusskante
- 15: Falz
- 16: Haken
- 17: Reifenträger
- 18: Rückwand
- 19: Hohlraum
- 20: Auswölbung
- 21: Auflage
- 22: Rad
- 23: Falz
- 24: Fachboden
- 25: Seitenwand

## Patentansprüche

1. Steckregal (1) insbesondere zur Lagerung von Sätzen von Fahrzeugrädern und -reifen (22), die aufrecht und sich jeweils an den Laufflächen gegenüber stehend hintereinander in Fächern (7) des Steckregals (1) gelagert sind, mit mehreren an ihren Längsseiten zueinander beabstandeten Teilregalen (2-4) mit jeweils einer Mehrzahl von vertikalen, im Querschnitt T-förmigen, aus jeweils einem gewalzten Hohlprofil bestehenden Längspfosten (5), die durch mehrere Traversen (6) an den Regalstirnseiten und Reifenträgern (17) an den Regallängsseiten verbunden sind und somit die Fächer (7) bilden, **dadurch gekennzeichnet, dass** an jedem Längspfosten (5), im Querschnitt gesehen, an den beiden Seitenflächen (8) dessen senkrechten Teils (9) und an den beiden Stirnseitenflächen (10) dessen Querteils (11) jeweils eine Lochreihe sowie an der oberen Außenfläche (12) dessen Querteils (11) zwei zueinander beabstandete Lochreihen rasterartig über die gesamte Länge des Längspfostens (5) ausgebildet sind, wobei die Lochungen (13) jeweils in Form, Abmessungen und Abstand gleich sind, und an der Unterseite des Längspfostens (5) die beiden senkrechten Abschlusskanten (14) des Hohlprofils ineinander gefalzt (15) sind, und dass in die Lochungen (13) des Längspfostens (5) die Traversen (6) gegebenenfalls mit den Reifenträgern (17) mit jeweils einem Paar von zu den Lochungen (13) kongruenten, abwärts gerichteten Haken (16) senkrecht einhängbar sind, wobei der Reifenträger (17) eine Rückwand (18) und, im Querschnitt gesehen, zwei übereinander angeordnete, je einen Hohlraum (19) bildende Auswölbungen (20) mit jeweils einer Lochung (13) aufweist, wobei die Haken (16) der Traverse (6) durch die Lochungen (13) in die Hohlräume (19) der Auswölbungen (20) des Reifenträgers (17) eingreifen, so dass die Traverse (6) am Längspfosten (5) und der Reifenträger (17) an der Traverse (6) immer an zwei Punkten eingehängt sind.

2. Steckregal nach Anspruch 1, **dadurch gekennzeichnet, dass** der Reifenträger (17) an seiner Oberseite eine Auflage (21) aufweist, auf welche die Traverse (6) aufgelegt ist und auf der das Rad oder der Reifen (22) aufliegt.

3. Steckregal nach Anspruch 1, **dadurch gekennzeichnet, dass** Reifenträger (17) aus einem gewalzten Hohlprofil besteht, wobei die nach unten weisenden Abschlusskanten des Hohlprofils ineinander gefalzt (23) sind.

4. Steckregal nach Anspruch 1, **dadurch gekennzeichnet, dass** in die Traverse (6) ein Fachboden (24) durch Klemmung eingehängt ist, wobei die Traverse (6) taschenartig ausgebildet und an jeder der Seiten des Fachbodens (24) eine nach unten ragende Seitenwand (25) angelenkt ist, die in die Tasche der Traverse (6) eingreift.

## Claims

1. A plug shelf (1) in particular for storing vehicle wheel sets and tyres (22), which are stored vertically and opposite to the respective running surfaces behind one another in compartments (7) of the plug shelf (1), with a plurality of partial shelves (2-4) spaced from one another on their longitudinal sides with a large number of vertical longitudinal posts (5), with a T-shaped cross-section and respectively formed of a rolled hollow profile, which are connected through several struts (6) on the front sides of the shelf and through tyre carriers (17) and thus form the compartments (7), **characterised in that**, seen in cross-section, a row of holes is arranged respectively at each longitudinal post, on both side surfaces (8) of the vertical portion (9) thereof and on both front side surfaces (10) of the cross portion (11) thereof, as well as two rows of holes spaced apart from one another are arranged at the upper external surface (12) of the cross portion thereof, over the whole length of the longitudinal posts (5), whereas the orifices (13) have each identical form, sizes and spacing, and both vertical termination edges (14) of the hollow profile are folded into one another (15) on the lower side of the longitudinal post (5), and that the struts (6) can be hooked vertically into the orifices (13) of the longitudinal post (5), possibly with the tyre carriers (17) each with a pair of downward-directed hooks (16), congruent to the orifices (13), whereas the tyre carrier (17) has a rear wall (18) and, seen in cross-section, two bulges (20) arranged on top of one another, each forming a cavity (19) each with an orifice (13), whereas the hooks (16) of the strut (6) engage through the orifices (13) into the cavities (19) of the bulges (20) of the tyre carrier (17), so that the strut (6) on the longitudinal post (5) and the tyre carrier (17) on the strut (6) are always suspended on two points.

2. A plug shelf according to claim 1, **characterised in that** the tyre carrier (17) exhibits a support (21) on its upper side, on which the strut (6) is laid and on which the wheel or the tyre (22) rests.

3. A plug shelf according to claim 1, **characterised in that** the tyre carrier (17) consists of a rolled hollow profile, whereas the downward-facing termination edges of the hollow profile are folded into one another (23).

4. A plug shelf according to claim 1, **characterised in that** a shelf bottom (24) is suspended into the strut (6) by clamping, whereas the strut (6) is designed in the form of a pocket and a downward protruding side wall (25) is articulated on each of the sides of the shelf bottom (24), which engages into the pocket of the strut (6).

## Revendications

1. Rayonnage (1) en particulier pour le stockage de jeux de roues et de pneus de véhicule (22), qui sont rangés à la verticale, se faisant face l'un derrière l'autre au niveau des bandes de roulement dans des compartiments (7) de l'étagère (1), présentant plusieurs étagères à séparation (2-4) espacées l'une de l'autre par leurs côtés longitudinaux, comprenant chacune une pluralité de montants longitudinaux (5) verticaux, en forme de T en coupe transversale, composé chacun d'un profil creux laminé, qui sont reliés par plusieurs traverses (6) au niveau des faces frontales d'étagère et supports de pneus (17) au niveau des faces longitudinales d'étagère, pour ainsi constituer les compartiments (7), **caractérisée en ce qu'**au niveau de chaque montant longitudinal (5), selon une coupe transversale, une rangée de trous est formée au niveau des deux faces latérales (8) de sa partie perpendiculaire (9) au niveau des deux faces frontales (10) de sa partie transversale (11) de même que deux rangées de trous espacées l'une de à l'autre sont formées au niveau de la surface externe supérieure (12) de sa partie transversale (11) par encliquetage sur toute la longueur du montant longitudinal (5), dans laquelle toutes les perforations (13) ont une forme, des dimensions et un écartement identiques, et que les deux bords d'extrémité (14) du profil creux sont pliés (15) l'un dans l'autre (15) au niveau de la face inférieure du montant longitudinal (5), et **en ce que** dans les perforations (13) du montant longitudinal (5), les traverses (6) le cas échéant avec les supports de pneus (17) peuvent être suspendues verticalement avec chacun une paire de crochets (16) dirigés vers le bas et congruents vers les perforations (13), où le support de pneus (17) présente un paroi arrière (18) et, en coupe transversale, deux protubérances (20) disposées l'une au-dessus de l'autre, constituant chacune une cavité (19), chaque protubérance ayant une perforation (13), où les crochets (16) de la traverse (6) s'engrènent à travers les perforations (13) dans les cavités (19) des protubérances (20) du support de pneus (17), de telle sorte que la traverse (6) au niveau du montant longitudinal (5) et le support de pneus (17) au niveau de la traverse (6) sont toujours suspendus en deux points.

2. Rayonnage selon la revendication 1, **caractérisée en ce que** le support de pneus (17) présente un réceptacle (21) au niveau de sa face supérieure, sur lequel repose la traverse (6) et sur lequel repose la roue ou le pneu (22).

3. Rayonnage selon la revendication 1, **caractérisée en ce que** le support de pneus (17) se compose d'un profil creux laminé, tandis que les bords d'extrémité, dirigés vers le bas, du profil creux sont pliés l'un dans l'autre (23).

4. Rayonnage selon la revendication 1, **caractérisée en ce qu'**un fond de compartiment (24) est suspendu dans la traverse (6) par serrage, dans laquelle la traverse (6) est conçue en forme de poche et une paroi latérale (25) faisant saillie vers le bas s'appuie au niveau de chaque côté du fond de compartiment (24), poche latérale s'engrènant dans la poche de la traverse (6).
